# EUROPEAN PATENT SPECIFICATION

(11) **EP 4 654 528 B1**
(45) Date of publication and mention of the grant of the patent: **02.12.2026**
(21) Application number: 25176926.1
(22) Date of filing: 16.05.2025
(51) Int. Cl.: H04L 9/40, H04W 12/00, H04W 12/069

(54) **RADIO AUTHENTICATION AS ROOT OF TRUST FOR TRANSPORT LAYER SECURITY**
FUNKAUTHENTIFIZIERUNG ALS VERTRAUENSBASIS FÜR TRANSPORTSCHICHTSICHERHEIT
AUTHENTIFICATION RADIO EN TANT QUE RACINE DE CONFIANCE POUR LA SÉCURITÉ DE COUCHE DE TRANSPORT

(30) Priority: 21.05.2024 US 202418670358
(43) Date of publication of application: 26.11.2025
(73) Proprietor: Motorola Solutions, Inc., Chicago, IL 60661 (US)
(72) Inventor: Jakobsen, Ken, 2600 Glostrup (DK); Pedersen, Kristian Gronkjaer, 2600 Glostrup (DK)
(74) Representative: Mrowiec, Robert

(56) References cited:
- EP-A1- 3 328 108
- EP-B1- 1 121 822
- WO-A1-2022/114760
- US-A1- 2012 102 319

## Description

### BACKGROUND

Wireless communication devices transfer information using various communication modalities. To satisfy the needs of a particular communication system or user, some wireless communication devices include features that support communications via multiple communication modalities. Devices with such features are sometimes referred to as converged devices. Communication modalities that some converged devices are compatible with include, for example, internet protocol (IP) based communication modalities (e.g., WiFi, long term evolution (LTE), or other cellular communication protocols) and land mobile radio (LMR) protocols, such as terrestrial trunked radio (TETRA). Some converged devices are configurable to access multiple distinct wireless networks, for example, both LTE and LMR networks, including networks that are either public or private.

EP 1 121 822 B1 discloses a radio access network infrastructure, such as the TETRA, connected to a second network infrastructure, such as a network sub-system (NSS) of the GSM, which has different authentication procedures and triplets than the radio access network. When the mobile station (MS) registers to the system, the mobile station is first authenticated in the overlaying network layer (GSM). In this initial authentication the authentication procedures and authentication parameters of the overlaying network, such as the authentication triplet of the GSM, is used.

US 2012/102319 A1 discloses a system and an apparatus (41) for reliably authenticating an appliance (42) involves a challenge message (C) being linked to the examination apparatus (40) by an examiner context information item (K).

WO 2022/114760 A1 discloses a 5G or 6G communication system for supporting higher data transmission rates than 4G communication systems such as LTE systems. According to an embodiment, a method for operating a user equipment (UE) for a mutual authentication operation in an access stratum (AS) section comprises transmitting a first message including a first random value to a base station, receiving, from the base station, a second message including a second random value and a base station certificate for the base station, in response to the first message, and identifying information included in the base station certificate and verifying validity of the base station certificate, when the base station certificate is valid according to a result of the verification of the base station certificate.

EP 3 328 108 A1 discloses an authentication method, a re-authentication method, a communication apparatus, and a communication system. The authentication method includes: a relay station (RS) sends an authentication request to a base station, the authentication request including a digital certificate of the RS; an authentication response sent by the base station is received, the authentication response including the digital certificate of the base station and being sent by the base station after authentication of the digital certificate of the RS is successful; the digital certificate of the base station is authenticated to obtain an authentication key (AK).

### BRIEF DESCRIPTION OF THE DRAWINGS

FIG. 1 illustrates a communication system for a converged device, according to some examples.
FIG. 2 illustrates a converged device, according to some examples.
FIG. 3 illustrates a method for mutual authentication of a radio device and a radio network infrastructure in a first network, according to some examples.
FIG. 4 illustrates a method for mutual authentication of a radio device and a radio network infrastructure in a second network, according to some examples.
FIG. 5 illustrates a method for authenticating, with a converged radio device, a radio network infrastructure, according to some examples.
FIG. 6 illustrates a method for authenticating, with a radio network infrastructure, a converged radio device, according to some examples.

Skilled artisans will appreciate that elements in the figures are illustrated for simplicity and clarity and have not necessarily been drawn to scale. For example, the dimensions of some of the elements in the figures may be exaggerated relative to other elements to help improve understanding of examples of the present disclosure.

The system, apparatus, and method components have been represented where appropriate by conventional symbols in the drawings, showing only those specific details that are pertinent to understanding the examples of the present disclosure so as not to obscure the disclosure with details that will be readily apparent to those of ordinary skill in the art having the benefit of the description herein.

### DETAILED DESCRIPTION

Converged wireless communication devices, often referred to herein as converged devices, are devices capable of communicating within multiple communication systems implementing different communication protocols. In some instances, converged devices include, in essence, two radios-a land mobile radio (LMR) and a broadband radio-for communicating in an IP based communication system (e.g., a WiFi communication system, long term evolution (LTE) communication system, or the like). Other communication protocols that may be implemented by the converged device include, for example, the Project 25 (P25) standard defined by the Association of Public Safety Communications Officials International (APCO), the TETRA standard defined by the European Telecommunication Standards Institute (ETSI), the Digital Private Mobile Radio (dPMR) standard also defined by the ETSI, the Digital Mobile Radio (DMR) standard also defined by the ESI, LTE-Advanced or LTE-Advanced Pro compliant with, for example, the 3GPP TS 36 specification series, or the 5G (including a network architecture compliant with, for example, the 3GPP TS 23 specification series and a new radio (NR) air interface compliant with the 3GPP TS 38 specification series) standard, among other possibilities.

Converged devices may be configured to switch transmission from a first communication protocol, or modality, to a second communication protocol or modality based on coverage information related to respective communication modalities. For example, a converged device may switch from performing communication in an LMR network to performing communication in an IP-based network when LMR coverage is below a threshold (e.g., when the converged device is at an edge of a TETRA cell). During operation according to the IP-based communication protocol, the converged device may communicate with an IP-enabled gateway or proxy server associated with the LMR network. The proxy server operates as a gateway to the LMR network and therefore enables the converged device to continue communications in the LMR network even when LMR coverage is insufficient.

Performing communication in an LMR network via an IP-based network (e.g., using the IP-enabled proxy server) presents a risk of a man in the middle (MITM) attack. Mutual authentication of the LMR infrastructure and the converged device, often referred to herein as a mobile station (MS), requires that the MS is provisioned with a client certificate and a root certificate for server certificates. However, distributing root certificates to a fleet of converged device is a laborious and challenging task.

Thus, there is a need for mutual authentication between a MS and a radio network infrastructure without pre-shared certificates. One example provides a converged radio device including: a radio-frequency (RF) transmitter system configured to perform communication in an internet protocol (IP) based network; and an electronic processor configured to authenticate with a switching and management infrastructure (SwMI) of a second network of a different modality than the IP-based network by establishing an unauthenticated secure IP session with a proxy server associated with the SwMI, computing data derived from a certificate received from the proxy server during establishment of the secure IP session, receiving, via the proxy server, a first authentication challenge from the SwMI, determining a result of the first authentication challenge based on the data derived from the certificate, transmitting a first response to the SwMI via the proxy server, the first response including a second authentication challenge and the result of the first authentication challenge, receiving, from the SwMI via the proxy server, a second response including a result of the second authentication challenge and an indication that the result of the first authentication challenge matches an expected result of the first authentication challenge, authenticating the SwMI by verifying that the result of the second authentication challenge matches an expected result of the second authentication challenge, and responsive to authenticating the SwMI, performing communication in the second network via the proxy server.

The invention is defined in the independent claims. In some aspects, determining the result of the first authentication challenge includes computing a modified value based on a base value received or generated by the MS during authentication with the SwMI and the data derived from the certificate.

In some aspects, the electronic processor is configured to compute the modified value according to a hash function of the base value and the data derived from the certificate.

In some aspects, the first authentication challenge includes a random number and a random seed RS used for generating the random number, and the modified value is a modified random number based on the random number and the data derived from the certificate.

In some aspects, the first authentication challenge includes a random seed RS, and determining the result of the first authentication challenge further includes computing a session key KS based on the random seed RS and a shared key K, and computing the result of the first authentication challenge according to a function of the modified value and the session key KS.

In some aspects, the second network is a land mobile radio (LMR) TETRA network, and the electronic processor is configured to compute the session key KS using a first TETRA algorithm, and the function of the modified value and the session key KS is a second TETRA algorithm.

In some aspects, verifying that the result of the second authentication challenge matches an expected result of the second authentication challenge includes computing the expected result of the second authentication challenge based on the data derived from the certificate, and determining that the result of the second authentication challenge matches the expected result of the second authentication challenge.

Another example provides a system for a switching and management infrastructure (SwMI) of a LMR network, the system including: an electronic processor configured to authenticate a mobile station (MS) to the SwMI by receiving, from the MS via a proxy server associated with the SwMI, a request to register to the LMR network, transmitting, to the MS via the proxy server, a first authentication challenge, receiving, from the MS via the proxy server, a first response including a second authentication challenge and a result of the first authentication challenge, authenticating the MS by verifying that the result of the first authentication challenge matches an expected result of the first authentication challenge, determining a result of the second authentication challenge based on data derived from a certificate received from the proxy server, transmitting a second response to the MS via the proxy server, the second response including the result of the second authentication challenge and an indication that the result of the first authentication challenge matches an expected result of the first authentication challenge, responsive to receiving, from the MS via the proxy server, an indication that the result of the second authentication challenge matches an expected result of the second authentication challenge, enabling communication by the MS in the LMR network via the proxy server.

In some aspects, determining the result of the second authentication challenge includes computing a modified value based on a base value received or generated by the SwMI during authentication with the MS and the data derived from the certificate.

In some aspects, the second authentication challenge includes a random number, and the modified value is a modified random number based on a hash function of the random number and the data derived from the certificate.

In some aspects, determining the result of the first authentication challenge further includes computing a session key KS' based on a random seed RS and a shared key K, and computing the result of the second authentication challenge according to a function of the modified value and the session key KS'.

In some aspects, the LMR network is a TETRA network, and the electronic processor is configured to compute the session key KS' using a first TETRA algorithm, and the function of the modified value and the session key KS' is a second TETRA algorithm.

In some aspects, verifying that the result of the first authentication challenge matches an expected result of the first authentication challenge includes computing the expected result of the first authentication challenge based on the data derived from the certificate, and determining that the result of the first authentication challenge matches the expected result of the second authentication challenge.

Another example provides a method for mutually authenticating a LMR Mobile Station (MS) with a switching and management infrastructure (SwMI) of a LMR network, the method including: establishing, with the MS, a secure internet protocol (IP) session with a proxy server associated with the SwMI; receiving, with the MS via the proxy server, a first authentication challenge from the SwMI; determining, with the MS, a result of the first authentication challenge based on first data derived from a certificate received from the proxy server during establishment of the secure IP session; authenticating the MS by verifying, with the SwMI, that the result of the first authentication challenge matches an expected result of the first authentication challenge; transmitting, with the MS, a second authentication challenge to the SwMI via the proxy server; determining, with the SwMI, a result of the second authentication challenge based on second data derived from a certificate known to be from the proxy server; authenticating the SwMI by verifying, with the MS, that the result of the second authentication challenge matches an expected result of the second authentication challenge; and responsive to mutual authentication of the SwMI and the MS, performing communication, with the MS, in the LMR network via the proxy server.

In some aspects, the method further includes: responsive to mutual authentication of the SwMI and the MS, storing in a memory associated with the MS, information related to the certificate received from the proxy server; and using the information related to the certificate received from the proxy server during authentication in a subsequent secure IP session with the proxy server.

In some aspects, the method further includes: responsive to mutual authentication of the SwMI and the MS, transmitting, with the MS, a certificate signing request (CSR) to the proxy server.

In some aspects, the secure IP session is a TLS session.

In some aspects, the proxy server is a gateway to the LMR network.

In some aspects, prior to mutual authentication of the MS and the SwMI and after establishment of the secure IP session with the MS, the proxy server restricts access of the MS to the LMR network.

In some aspects, the MS connects to the proxy server from at least one selected from the group consisting of cellular network and a WiFi network, and mutually authenticating the MS with the SwMI is performed after authentication of the MS to the cellular network or the WiFi network.

Examples are herein described with reference to flowchart illustrations and/or block diagrams of methods, apparatus (systems) and computer program products according to examples. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a special purpose and unique machine, such that the instructions, which execute via the processor of the computer or other programmable data processing apparatus, create means for implementing the functions/acts specified in the flowchart and/or block diagram block or blocks. The methods and processes set forth herein need not, in some examples, be performed in the exact sequence as shown and likewise various blocks may be performed in parallel rather than in sequence. Accordingly, the elements of methods and processes are referred to herein as "blocks" rather than "steps."

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the flowchart and/or block diagram block or blocks.

The computer program instructions may also be loaded onto a computer or other programmable data processing apparatus that may be on or off-premises, or may be accessed via the cloud in any of a software as a service (SaaS), platform as a service (PaaS), or infrastructure as a service (IaaS) architecture so as to cause a series of operational blocks to be performed on the computer or other programmable apparatus to produce a computer implemented process such that the instructions which execute on the computer or other programmable apparatus provide blocks for implementing the functions/acts specified in the flowchart and/or block diagram block or blocks. It is contemplated that any part of any aspect or example discussed in this specification can be implemented or combined with any part of any other aspect or example discussed in this specification.

Further advantages and features consistent with this disclosure will be set forth in the following detailed description, with reference to the figures.

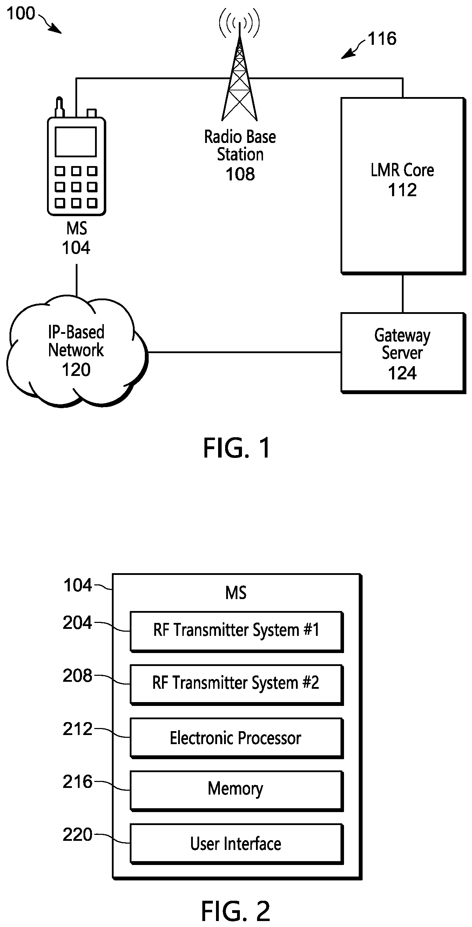

Referring now to the drawings, FIG. 1 illustrates a communication system 100, according to some examples. The system 100 includes a converged radio device 104, often referred to herein as a mobile station (MS) 104, operable to communicate according to a first communication protocol and a second communication protocol different from the first communication protocol.

FIG. 2 schematically illustrates the MS 104, according to some examples. In the example illustrated in FIG. 2, the MS 104 includes a first radio-frequency (RF) transmitter system 204 configured to transmit communication signals according to a first communication protocol and a second RF transmitter system 208 configured to transmit communication signals according to a second communication protocol different from the first communication protocol. The MS 104 further includes an electronic processor 212 (i.e., one or more electronic processors 212) configured to control operation of the MS 104. A memory 216 stores information related to operation of the MS 104, such as program instructions that, when executed by the electronic processor 212, cause the electronic processor to perform, among other things, the methods described herein. The memory 216 may further store certificates, shared keys, or other data used for performing communication according to the first or second communication protocols. The MS 104 further includes a user interface 220. The user interface 220 includes, among other things, a microphone for receiving voice data from a user of the MS 104 to be transmitted using the first RF transmitter system 204 and/or the second RF transmitter system 208. The user interface 220 may further include a speaker for outputting, to the user, sound data received via the first RF transmitter system 204 and/or the second RF transmitter system 208.

Referring again to FIG. 1, during operation according to the first communication protocol, the MS 104 communicates with a LMR base station 108 of an LMR network, using, for example, the first RF transmitter system 208. The LMR base station 108 represents one of a plurality of LMR base stations 108 communicatively connected to an LMR core network 112. The LMR core network 112, or LMR core 112, includes, a collection of network hardware devices (e.g., switches, routers, processors, etc.) for providing core services of the LMR network. The LMR base stations 108 and the LMR core network 112 define a switching and management infrastructure (SwMI) 116. In one example, the SWMI is TETRA SwMI.

During operation according to the second communication protocol, the MS 104 communicates within IP-based network 120, for example a WiFi network, cellular broadband network, satellite internet network, and/or the like. The MS 104 communicates in the IP-based network using, for example, the second RF transmitter system 208. The MS 104 may switch from operation according to an LMR protocol to operation according to an IP-based protocol responsive to, for example, detecting that LMR coverage is below a threshold. To maintain communications with limited interruption, the MS 104 connects to an IP-enabled gateway server 124, otherwise referred to as a proxy server 124, associated with the SwMI 116 but firewalled from the LMR core 112. The proxy server 124 enables the MS 104 to continue ongoing transmissions to the LMR core 112 (e.g., connecting the MS 104 to the same LMR call) using an IP-based communication protocol when LMR communication via the LMR base station 108 is otherwise unavailable.

To perform communication with the SwMI 116 according to the LMR communication protocol, the MS 104 locates the base station 108 and performs a mutual authentication with the SwMI 116 (e.g., with the LMR core 112 via the LMR base station 108). Similarly, to perform communication with the SwMI 116 according to the IP-based communication protocol, the MS 104 is configured to perform mutual authentication with the SwMI 116 via the proxy server 124.

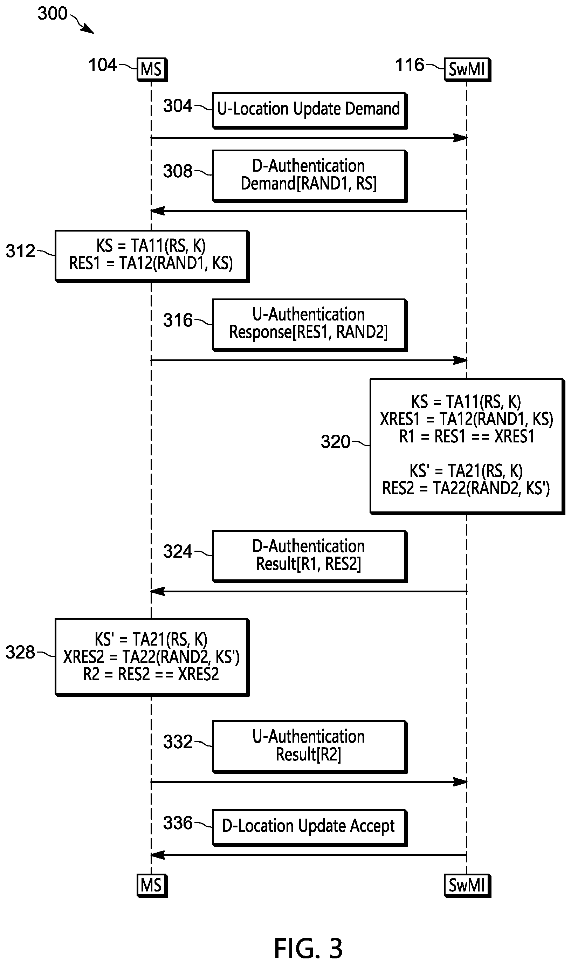

FIG. 3 illustrates an example method 300 of performing a conventional LMR authentication (e.g., a TETRA authentication) between the MS 104 and the SwMI 116 during LMR communication via the LMR base station 108. The method 300 is performed with respect to the MS 104 (e.g., the electronic processor 212 and the first RF transmitter system 204) and the SwMI 116 (e.g., the LMR core 112 and the LMR base station 108). For example, communication between the MS 104 and the LMR core 112 is performed by way of the LMR base station 108.

The method 300 may be performed in response to activation of the MS 104 (e.g., powering on the MS 104). For example, in response to powering on, the MS 104 may locate a nearby LMR base station 108, and transmit a request to register to the LMR network (e.g., U-Location Update Demand) (at block 304). In response to the request to register to the LMR network, the SwMI 116 transmits a first authentication challenge to the MS 104 (e.g., D-Authentication Demand) including a first random number RAND1 and random seed RS used for generating the first random number RAND1 (at block 308).

Responsive to receiving the first authentication challenge, the MS 104 computes a result of the first authentication challenge using the random number RAND1, the random seed RS, and a key K (at block 312). The key K is a secret key shared between the MS 104 and the SwMI 116. The key K is loaded to the MS 104 and the SwMI 116 by, for example, a key variable loader (KVL). The MS 104 computes the result RES1 of the first authentication challenge by first computing a first session key KS based on a function of the random seed RS and the shared key K, for example. The first session key KS may be computed using a first predefined TETRA authentication algorithm (e.g., TETRA algorithm TA11). The MS 104 computes the result RES1 of the first authentication challenge as a function of the first session key KS and the first random number RAND 1, for example, using a second predefined TETRA authentication algorithm (e.g., TETRA authentication algorithm TA12).

The MS 104 transmits a first response to the SwMI 116 (e.g., U-Authentication Response) including a second authentication challenge and the result RES1 of the first authentication challenge (at block 316). The second authentication challenge includes, for example, a second random number RAND2 generated using the random seed RS.

The SwMI 116 verifies the result RES1 matches an expected result XRES1 of the first authentication challenge by computing the first session key KS as a function (e.g., the first predefined TETRA authentication algorithm TA11) of the random seed RS and the shared key K, and computing the expected result XRES1 of the first authentication challenge as a function (e.g., the second predefined TETRA authentication algorithm TA12) of the first random number RAND1 and the first session key KS (at block 320).

The SwMI 116 also determines a result of the second authentication challenge by first computing a second session key KS' as a function (e.g., a third predefined TETRA authentication algorithm, such as TA21) of the random seed RS and the shared key K. The SwMI 116 computes the result RES2 of the second authentication challenge as a function (e.g., a fourth predetermined TETRA authentication algorithm, such as TA22) of the second random number RAND2 and the second session key KS'.

The SwMI 116 transmits the second response to the MS 104 (e.g., D-Authentication Result) including an indication R1 that the result RES1 of the first authentication challenge matches (e.g., is equal to) the expected result XRES1 of the first authentication challenge, and the result RES2 of the second authentication challenge (at block 324).

The MS 104 verifies that the result RES2 matches an expected result XRES2 of the second authentication challenge by computing the second session key KS' as a function (e.g., the third predefined TETRA authentication algorithm TA21) of the random seed RS and the shared key K, and computing the expected result XRES2 of the second authentication challenge as a function (e.g., the fourth predefined TETRA authentication algorithm TA22) of the second random number RAND2 and the second session key KS' (at block 328). The MS 104 transmits a third response including an indication R2 that the result RES2 of the second authentication challenge matches the expected result XRES2 of the second authentication challenge (at block 332). In response to receiving the indication R2, the SwMI 116 accepts registration of the MS 104 to the LMR network (D-Location Update Accept) and enables communication by the MS 104 in the LMR network via the LMR base station 108 (at block 336).

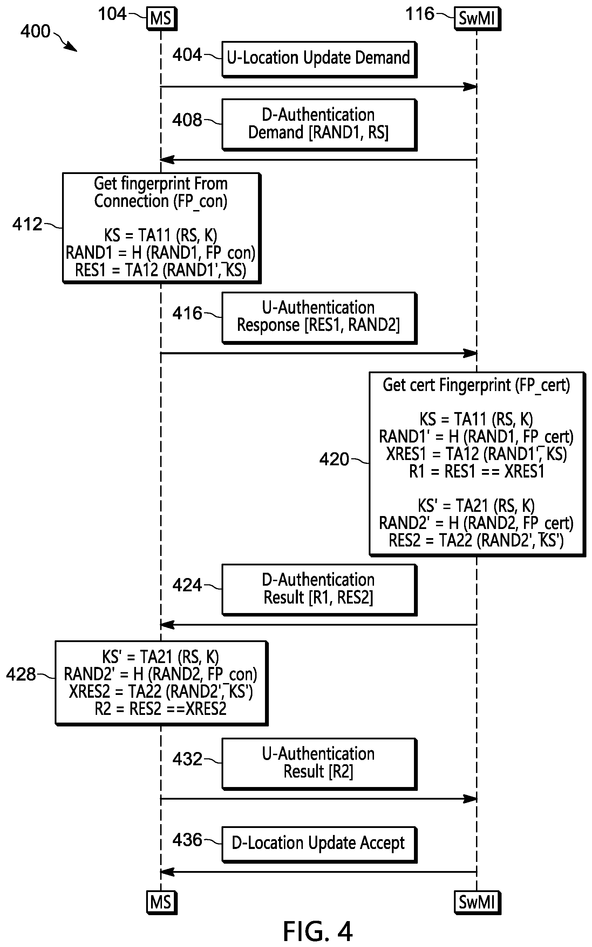

Referring again to FIG. 1, in order to perform communication according to the second communication protocol (i.e., the IP-based communication protocol), the MS 104 establishes a secure IP session with the proxy server 124, such as a transport layer security (TLS) session. However, a standard LMR authentication process (e.g., the TETRA authentication method 300 described above with respect to FIG. 3), may be insufficient to protect against MITM attacks on the unauthenticated IP session. As an alternative to standard TETRA authentication, converged devices can be provisioned with client certificates and root certificates, which is a laborious task. Therefore, to improve efficiency and reliability of operation of the MS 104 in the IP-based network, FIG. 4 illustrates a modified authentication method 400 that uses a pre-existing LMR authentication (e.g., TETRA authentication) as a root of trust for an IP session, such as a TLS session.

The method 400 is performed with respect to the MS 104 (e.g., the electronic processor 212 and the second RF transmitter system 208) and the SwMI 116 (e.g., the LMR core 112). Communication between the MS 104 and the LMR core 112 is performed by way of the proxy server 124, or gateway server 124. For example, the MS 104 does not directly communicate with the LMR core 112. Rather, the MS 104 communicates with the proxy server 124 over the IP-based network 120, and the proxy server 124 in turn communicates with the LMR core 112 of the SwMI 116 to facilitate mutual authentication of the MS 104 and the SwMI 116.

The method 400 may be performed in response to activation of an IP-based communication mode (e.g., in response to a drop in LMR coverage, in response to a user selection of the IP-based communication mode, and/or another trigger condition). When the MS 104 initially connects to the IP-based network 120, the MS 104 may perform an initial authentication with the IP-based network separate from an authentication performed with respect to the SwMI 116.

In response to activation of the IP-based communication mode, the MS 104 transmits, to the SwMI 116 via the proxy server 124, a request to register to the LMR network (e.g., U-Location Update Demand) (at block 404). In response to the request to register to the LMR network, the SwMI 116 transmits to the MS 104, via the proxy server 124, a first authentication challenge (e.g., D-Authentication Demand) including, for example, a first random number RAND1 and/or random seed RS used for generating the first random number RAND 1 (at block 408).

Responsive to receiving the first authentication challenge, the MS 104 computes a result of the first authentication challenge using the random number RAND 1, the random seed RS, a shared key K, and first data derived from a certificate associated with the IP connection (e.g., the TLS session) between the MS 104 and the proxy server 124 (at block 412). The first data derived from the certificate associated with the proxy server 124 and received by the MS 104 is identifying data associated with the certificate. For example, the first data derived from the certificate may be a fingerprint FP_con computed from a portion or all of a certified received by the MS 104 from the proxy server during establishment of One example of the first data derived from the certificate of the proxy server 124 received by the MS 104 is the fingerprint FP_con. Other examples include those described above.

The key K is the secret key shared between the MS 104 and the SwMI 116 and used for LMR authentication between the MS 104 and the SwMI 116 (e.g., in the method 300 described above with respect to FIG. 3). By relying on the pre-existent shared key K, the MS and the SwMI 116 may perform mutual authentication of one another via the proxy server 124 without the need for pre-shared certificates.

In using pre-existing LMR authentication as a base for trust for the TLS authentication, the MS 104 computes a first session key KS based on a function of the random seed RS and the shared key K. The first session key KS may be computed using a first predefined algorithm (e.g., a predefined TETRA authentication algorithm, such as TA11). While various TETRA authentication algorithms are described herein, the MS 104 and/or the SwMI 116 may compute values using authentication functions other than the TETRA authentication algorithms described herein (e.g., other TETRA functions, or functions that are not associated with TETRA).

Because relying only on the shared key K may be insufficient to protect against, for example, a MITM attack during communication performed by way of the proxy server 124, in some instances. the MS 104 also computes a first modified value based on the first data derived from the certificate associated with the IP connection to the proxy server 124 (e.g., the fingerprint FP_con) and a first base value received or generated by the MS 104 during authentication with the SwMI 116. The first base value may be, for example, the first random number RAND1, the random seed RS, the shared key K, the first session key KS, or an output value generated by the MS 104. The MS 104 computes the modified value according to a predefined function (e.g., a predefined hash function H) known to the SwMI 116 that mixes the first data derived from the certificate (e.g., FP_con) with the base value. One example of the first modified value is a first modified random number RAND1' computed by the MS 104 based on the fingerprint FP_con and the first random number RAND 1. Other examples include those described above.

In one example, the MS 104 computes the result RES1 of the first authentication challenge as a function of the first session key KS and the first modified random number RAND1', for example, using a second predefined TETRA authentication algorithm (e.g., TETRA authentication algorithm TA12).

In this example, the MS 104 transmits, to the SwMI 116 via the proxy server 124, a first response (e.g., U-Authentication Response) including a second authentication challenge and the result RES1 of the first authentication challenge (at block 416). In some instances, the second authentication challenge includes a second random number RAND2 generated using the random seed RS.

In some instances, the SwMI 116 verifies the result RES1 matches an expected result XRES1 of the first authentication challenge by computing second data derived from a certificate known by the SwMI 116 to be associated with the proxy server 124, computing the first session key KS as a function (e.g., the first predefined TETRA authentication algorithm TA11) of the random seed RS and the shared key K, and computing the first modified random number RAND1' according to the hash function H of the random number RAND1 and the second data derived from the certificate known to be from the proxy server 124 (at block 420). The second data derived from the certificate associated with the proxy server 124 and received by the SwMI 116 is identifying data associated with the certificate. For example, the second data derived from the certificate known to be associated with the proxy server 124 may be a fingerprint FP_cert computed by the SwMI 116 of at least a portion of the certificate known to be associated with the proxy server 124, a hash of at least a portion of the certificate known to be associated with the proxy server 124, and/or the like. One example of the second data derived from the certificate of the proxy server 124 received by the SwMI 116 the fingerprint FP_cert. Other examples include those described above.

The SwMI 116 computes the expected result XRES1 of the first authentication challenge as a function (e.g., the second predefined TETRA authentication algorithm TA12) of the first modified random number RAND 1' and the first session key KS.

In some instances, the SwMI 116 computes and stores the expected result XRES1 of the first authentication challenge prior to receiving, from the MS 104 via the proxy server 124, the result of the first authentication challenge.

In some instances, the SwMI 116 also determines a result of the second authentication challenge by computing a second session key KS' as a function (e.g., a third predefined TETRA authentication algorithm, such as TA21) of the random seed RS and the shared key K.

The SwMI 116 also computes a second modified value based on the second data derived from the certificate (e.g., FP_con) and a second base value received or generated by the SwMI 116 during authentication of the MS 104. The second base value may be, for example, the second random number RAND2, the random seed RS, the shared key K, the second session key KS', or an output value generated by the SwMI 116. The SwMI 116 computes the second modified value according to a predefined function (e.g., a hash function H) that mixes the second data derived from the certificate known to be from the proxy server 124 (e.g., the fingerprint FP_con) with the second base value. One example of the second modified value is a second modified random number RAND2' computed by the SwMI 116 based on the fingerprint FP_con and the second random number RAND2. Other examples include those described above.

The hash function H used for computing the second modified random number RAND2' may be the same or different from the hash function H used for computing the first modified random number RAND1'. The SwMI 116 computes the result RES2 of the second authentication challenge as a function (e.g., a fourth predetermined TETRA authentication algorithm, such as TA22) of the second modified random number RAND2' and the second session key KS'.

The SwMI 116 transmits, to the MS 104 via the proxy server 124, the second response (e.g., D-Authentication Result) including an indication R1 that the result RES1 of the first authentication challenge matches (i.e., is equal to) the expected result XRES1 of the first authentication challenge, and including the result RES2 of the second authentication challenge (at block 424).

When the fingerprint FP_con computed by the MS 104 (e.g., based on the certificate of the proxy server 124 received by the MS 104) does not match the fingerprint FP_cert computed by the SwMI 116 (e.g., based on the certificate of the proxy server 124 received by the SwMI 116), or the shared key K loaded to the MS 104 (and stored, for example, in the memory 216 of the MS 104) does not the shared key K loaded to the SwMI 116 (and stored, for example, in a memory device included in the LMR core 112), the expected result XRES1 computed by the SwMI 116 will not match the result RES1 received by the SwMI 116 from the MS 104 via the proxy server 124. In such instances, the SwMI 116 and/or the MS 104 terminates the authentication process of the method 400. For example, the SwMI 116 may transmit an indication R1 that the result RES1 of the first authentication challenge does not match the expected result XRES1 of the first authentication challenge, and terminate the authentication process. Alternatively, the MS 104 may terminate the authentication process responsive to receiving an indication R1 that the result RES1 does not match the expected result XRES1 of the first authentication challenge. In contrast, when R1 indicates that the result RES1 does match the expected result XRES1 of the first authentication challenge, the authentication process of the method 400 continues.

The MS 104 verifies that the result RES2 matches an expected result XRES2 of the second authentication challenge by computing the second session key KS' as a function (e.g., the third predefined TETRA authentication algorithm TA21) of the random seed RS and the shared key K, computing the second modified random number RAND2' according to a hash function H of the second random number RAND2 and the fingerprint FP_con associated with the IP connection between the MS 104 and the proxy server 124, and computing the expected result XRES2 of the second authentication challenge as a function (e.g., the fourth predefined TETRA authentication algorithm TA22) of the second modified random number RAND2' and the second session key KS' (at block 428).

In some instances, the MS 104 computes and stores the expected result of the second authentication challenge prior to receiving, from the SwMI 116 via the proxy server 124, the result of the second authentication challenge.

The MS 104 transmits a third response (e.g., U-Authentication Result) including an indication R2 that the result RES2 of the second authentication challenge matches the expected result XRES2 of the second authentication challenge (at block 432). In response to receiving the indication R2, the SwMI 116 accepts registration of the MS 104 to the LMR network (D-Location Update Accept) and enables communication by the MS 104 in the LMR network via the proxy server 124 (at block 436).

When the fingerprint FP_cert computed by the SwMI 116 (e.g., based on the certificate of the proxy server 124 received by the SwMI 116) does not match the fingerprint FP_con computed by the MS 104, or the shared key K loaded to the SwMI 116 does not the shared key K loaded to the MS 104, the expected result XRES2 computed by the MS 104 will not match the result RES2 received by the MS 104 from the SwMI 116 via the proxy server 124. In such instances, the SwMI 116 and/or the MS 104 terminates the authentication process of the method 400. For example, the MS 104 may transmit an indication R2 that the result RES2 of the second authentication challenge does not match the expected result XRES2 of the second authentication challenge, and terminate the authentication process. Alternatively, the SwMI 116 may terminate the authentication process responsive to receiving an indication R2 that the result RES2 does not match the expected result XRES2 of the second authentication challenge. In contrast, when R2 indicates that the result RES2 does match the expected result XRES2 of the second authentication challenge, the authentication process of the method 400 continues.

Accordingly, using one or more aspects the techniques and processes described, the certificate received from the proxy server 124 during establishment of a secure IP session (e.g., a TLS session), may be authenticated in a manner which does not rely on using a public key of the certification authority that signed the certificate of the proxy server 124. The IP connection between the MS 104 and the proxy server 124 is considered a mutually authenticated connection that provides integrity and confidentiality without the MS 104 relying on trustworthiness of a root certificate holding the key of the certification authority that signed the proxy server certificate.

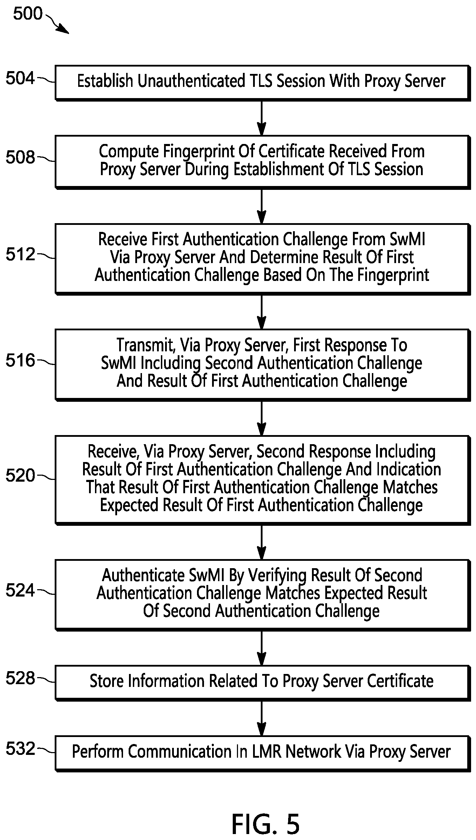

FIG. 5 illustrates an example method 500, performed by the MS 104 (e.g., using the electronic processor 212 in conjunction with other components of the MS 104), for mutually authenticating the SwMI 116 for IP-based communication. Some steps of the method 500 may be substantially similar to steps of the method 400 described above with respect to FIG. 4.

In the example shown, the method 500 includes establishing with the MS 104 responsive to detecting a trigger condition for operation in an IP-based communication mode, a secure TLS session with the proxy server 124 (at block 504). The initial connection to the proxy server 124 by the MS 104 is to, for example, a buffer zone or waiting area that is isolated from full functionality of the LMR network. For example, the MS 104 may only have access to authentication functionality of the LMR core 112. During establishment of the TLS session (at block 504), the MS 104 receives a certificate from the proxy server 124. Accordingly, the MS 104 computes a fingerprint or other data derived from the certificate received from and associated with the proxy server 124 (at block 508). The fingerprint computed by the MS 104 may cover some or all of the certificate received from the proxy server 124.

Responsive to establishing the TLS session with the proxy server 124, the MS 104 receives a first authentication challenge from the SwMI 116 via the proxy server 124 and determines a result of the first authentication challenge based at least on the fingerprint computed by the MS 104 (at block 512). The first authentication challenge may be substantially similar to the first authentication challenge described above with respect to the method 400.

Responsive to computing the result of the first authentication challenge (at block 512), the MS 104 transmits, to the SwMI 116 via the proxy server 124, a first response including a second authentication challenge and the result of the first authentication challenge (at block 516). The second authentication challenge may be substantially similar to the second authentication challenge described above with respect to block 416 of the method 400.

Responsive to transmitting the first response, the MS 104 receives, from the SwMI 116 via the proxy server 124, a second response including a result of the second authentication challenge and an indication that the result of the first authentication challenge, computed and transmitted by the MS 104, matches an expected result of the first authentication challenge (i.e., that the MS 104 is authenticated with respect to the SwMI 116) (at block 520). The MS 104 authenticates the SwMI by verifying that the result of the second authentication challenge matches an expected result of the second authentication challenge (at block 524). Verifying that the result of the second authentication challenge matches an expected result of the second authentication challenge may be substantially similar to the process described at block 428 of the method 400. Authenticating the SwMI 116 (at block 524) may also include transmitting an indication to the SwMI 116, via the proxy server 124, that the result of the second authentication challenge matches an expected result of the second authentication challenge.

In some instances, responsive to mutual authentication of the MS 104 and the SwMI 116 (e.g., authentication of blocks 520 and block 524), the MS 104 stores, in the memory 216, information related to the proxy server certificate (at block 528) to be used for subsequent IP connections to the proxy server 124. For example, subsequent to mutual authentication, the MS 104 may transmit a certificate signing request (CSR) to the proxy server 124, and store, in the memory 216, a signed certificate received from the proxy server 124.

Responsive to mutual authentication of the MS 104 and the SwMI 116, the MS 104 performs communications in the LMR network using the IP-based network 120 and the proxy server 124 (at block 532).

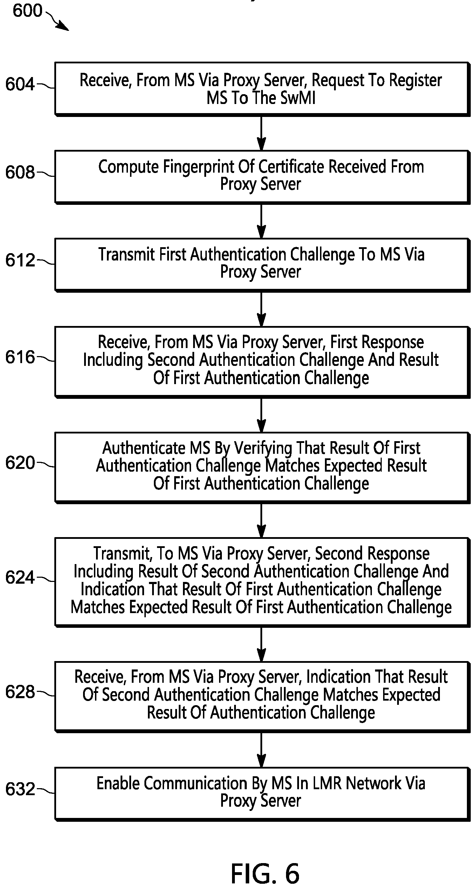

FIG. 6 illustrates an example method 600, performed by the SwMI 116 (e.g., using components of the LMR core 112), for mutually authenticating the MS 104 for IP-based communication. Some steps of the method 600 may be substantially similar to steps of the method 400 described above with respect to FIG. 4.

The method 600 includes receiving, with the SwMI 116 via the proxy server 124, a request from the MS 104 to register to the SwMI 116 (at block 604). Responsive to, or prior to, the request to register to the SwMI 116, the SwMI 116 computes a fingerprint of a certificate trusted by the SwMI 116 to be associated with the proxy server 124 (at block 608).

Responsive to receiving the request from the MS 104 to register to the SwMI 116, the SwMI 116 transmits a first authentication challenge to the MS 104 via the proxy server 124 (at block 612). The first authentication challenge may be substantially similar to the first authentication challenge described above with respect to block 408 of the method 400.

The SwMI 116 receives, from the MS 104 via the proxy server 124, a first response including a second authentication challenge and a result of the first authentication challenge (at block 616). The SwMI 116 authenticates the MS 104 by verifying that the result of the first authentication challenge matches an expected result of the first authentication challenge (at block 620).

The SwMI 116 determines and transmits, to the MS 104 via the proxy server 124, a result of the second authentication challenge, and transmits an indication that the result of the first authentication challenge matches the expected result of the first authentication challenge (at block 624). The second authentication challenge may be substantially similar to the second authentication challenge described above with respect to block 416 of the method 400.

The SwMI 116 receives, from the MS 104 via the proxy server 124, an indication that the result of the second authentication challenge matches an expected result of the second authentication challenge (at block 628). Responsive to mutual authentication of the MS 104 and the SwMI 116 (e.g., responsive to receiving the indication at block 628), the SwMI 116 enables communication by the MS 104 in the LMR network (e.g., with the LMR core 112) via the proxy server 124 (at block 632).

As should be apparent from this detailed description above, the operations and functions of the electronic computing device are sufficiently complex as to require their implementation on a computer system, and cannot be performed, as a practical matter, in the human mind. Electronic computing devices such as set forth herein are understood as requiring and providing speed and accuracy and complexity management that are not obtainable by human mental steps, in addition to the inherently digital nature of such operations (e.g., a human mind cannot interface directly with RAM or other digital storage, cannot transmit or receive electronic messages, electronically encoded video, electronically encoded audio, etc., and cannot communicate in radio networks, among other features and functions set forth herein).

The order of the steps of the methods 400, 500, and/or 600 described above with respect to FIGS. 4-6, respectively, may be implemented in a different order than described and illustrated. For example, the MS 104 may transmit an authentication challenge to the SwMI 116 prior to the SwMI 116 transmitting an authentication challenge to the MS 104. Additionally, the methods 400, 500, and/or 600 may include more or fewer steps than described and illustrated.

In the foregoing specification, various examples have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a," "has ...a," "includes ...a," "contains ...a" does not, without more constraints, preclude the existence of additional identical elements in the process, method, article, or apparatus that comprises, has, includes, contains the element. Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

Also, it should be understood that the illustrated components, unless explicitly described to the contrary, may be combined or divided into separate software, firmware, and/or hardware. For example, instead of being located within and performed by a single electronic processor, logic and processing described herein may be distributed among multiple electronic processors. Similarly, one or more memory modules and communication channels or networks may be used even if examples described or illustrated herein have a single such device or element. Also, regardless of how they are combined or divided, hardware and software components may be located on the same computing device or may be distributed among multiple different devices. Accordingly, in this description and in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

It will be appreciated that some examples may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an example can be implemented as a computer-readable storage medium having computer readable code stored thereon for programming a computer (e.g., comprising a processor) to perform a method as described and claimed herein. Any suitable computer-usable or computer readable medium may be utilized. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. In the context of this document, a computer-usable or computer-readable medium may be any medium that can contain, store, communicate, propagate, or transport the program for use by or in connection with the instruction execution system, apparatus, or device.

The terms "substantially," "essentially," "approximately," "about" or any other version thereof, are defined as being close to as understood by one of ordinary skill in the art, and in one non-limiting example the term is defined to be within 10%, in another example within 5%, in another example within 1% and in another example within 0.5%. The term "one of," without a more limiting modifier such as "only one of," and when applied herein to two or more subsequently defined options such as "one of A and B" should be construed to mean an existence of any one of the options in the list alone (e.g., A alone or B alone) or any combination of two or more of the options in the list (e.g., A and B together).

A device or structure that is "configured" in a certain way is configured in at least that way, but may also be configured in ways that are not listed.

The terms "coupled," "coupling" or "connected" as used herein can have several different meanings depending on the context in which these terms are used. For example, the terms coupled, coupling, or connected can have a mechanical or electrical connotation. For example, as used herein, the terms coupled, coupling, or connected can indicate that two elements or devices are directly connected to one another or connected to one another through intermediate elements or devices via an electrical element, electrical signal or a mechanical element depending on the particular context.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separately claimed subject matter.

## Claims

1. A converged radio device (104) comprising:
a radio-frequency (RF) transmitter system (204, 208) configured to perform communication in an internet protocol (IP) based network; and
an electronic processor configured to authenticate with a switching and management infrastructure (SwMI) of a second network of a different modality than the IP-based network by
establishing an unauthenticated secure IP session with a proxy server associated with the SwMI,
computing data derived from a certificate received from the proxy server during establishment of a secure IP session,
receiving, via the proxy server, a first authentication challenge from the SwMI,
determining a result of the first authentication challenge based on the data derived from the certificate,
transmitting a first response to the SwMI via the proxy server, the first response including a second authentication challenge and the result of the first authentication challenge,
responsive to the result of the first authentication challenge matching the expected result of the first authentication challenge, receiving, from the SwMI via the proxy server, a second response including a result of the second authentication challenge and an indication that the result of the first authentication challenge matches an expected result of the first authentication challenge,
authenticating the SwMI by verifying that the result of the second authentication challenge matches an expected result of the second authentication challenge, and
responsive to authenticating the SwMI, performing communication in the second network via the proxy server.

2. The converged radio device (104) of claim 1, wherein
determining the result of the first authentication challenge includes computing a modified value based on a base value received or generated by the converged radio device during authentication with the SwMI and the data derived from the certificate.

3. The converged radio device (104) of claim 2, wherein the electronic processor is configured to compute the modified value according to a hash function of the base value and the data derived from the certificate.

4. The converged radio device (104) of claim 2 or 3, wherein
the first authentication challenge includes a random number and a random seed RS used for generating the random number, and
the modified value is a modified random number based on the random number and the data derived from the certificate.

5. The converged radio device (104) of claim 2 or 3 or 4, wherein
the first authentication challenge includes a random seed RS, and
determining the result of the first authentication challenge further includes
computing a session key KS based on the random seed RS and a shared key K, and
computing the result of the first authentication challenge according to a function of the modified value and the session key KS.

6. The converged radio device (104) of claim 5, wherein the second network is a land mobile radio (LMR) TETRA network, and the electronic processor is configured to compute the session key KS using a first TETRA algorithm, and the function of the modified value and the session key KS is a second TETRA algorithm.

7. The converged radio device (104) according to any of the preceding claims, wherein verifying that the result of the second authentication challenge matches an expected result of the second authentication challenge includes
computing the expected result of the second authentication challenge based on the data derived from the certificate, and
determining that the result of the second authentication challenge matches the expected result of the second authentication challenge.

8. A system (100) for a switching and management infrastructure (SwMI) of a LMR network, the system comprising:
an electronic processor configured to authenticate a mobile station (MS) to the SwMI by
receiving, from the MS via a proxy server associated with the SwMI, a request to register to the LMR network,
transmitting, to the MS via the proxy server, a first authentication challenge,
receiving, from the MS via the proxy server, a first response including a second authentication challenge and a result of the first authentication challenge,
authenticating the MS by verifying that the result of the first authentication challenge matches an expected result of the first authentication challenge,
determining a result of the second authentication challenge based on data derived from a certificate received from the proxy server,
transmitting a second response to the MS via the proxy server, the second response including the result of the second authentication challenge and an indication that the result of the first authentication challenge matches an expected result of the first authentication challenge,
responsive to receiving, from the MS via the proxy server, an indication that the result of the second authentication challenge matches an expected result of the second authentication challenge, enabling communication by the MS in the LMR network via the proxy server.

9. The system (100) of claim 8, wherein
determining the result of the second authentication challenge includes computing a modified value based on a base value received or generated by the SwMI during authentication with the MS and the data derived from the certificate.

10. The system (100) of claim 9 wherein
the second authentication challenge includes a random number, and
the modified value is a modified random number based on a hash function of the random number and the data derived from the certificate.

11. The system (100) of claim 9 or 10, wherein determining the result of the first authentication challenge further includes
computing a session key KS' based on a random seed RS and a shared key K, and
computing the result of the second authentication challenge according to a function of the modified value and the session key KS'.

12. The system (100) of claim 11, wherein the LMR network is a TETRA network, and the electronic processor is configured to compute the session key KS' using a first TETRA algorithm, and the function of the modified value and the session key KS' is a second TETRA algorithm.

13. The system (100) according to any of the claims from 8 to 12, wherein verifying that the result of the first authentication challenge matches an expected result of the first authentication challenge includes
computing the expected result of the first authentication challenge based on the data derived from the certificate, and
determining that the result of the first authentication challenge matches the expected result of the second authentication challenge.

14. A method for mutually authenticating a LMR Mobile Station (MS) with a switching and management infrastructure (SwMI) of a LMR network, the method comprising:
establishing, with the MS, a secure internet protocol (IP) session with a proxy server associated with the SwMI;
receiving, with the MS via the proxy server, a first authentication challenge from the SwMI;
determining, with the MS, a result of the first authentication challenge based on first data derived from a certificate received from the proxy server during establishment of the secure IP session;
authenticating the MS by verifying, with the SwMI, that the result of the first authentication challenge matches an expected result of the first authentication challenge;
transmitting, with the MS, a second authentication challenge to the SwMI via the proxy server;
determining, with the SwMI, a result of the second authentication challenge based on second data derived from a certificate known to be from the proxy server;
authenticating the SwMI by verifying, with the MS, that the result of the second authentication challenge matches an expected result of the second authentication challenge; and
responsive to mutual authentication of the SwMI and the MS, performing communication, with the MS, in the LMR network via the proxy server.

15. The method of claim 14, further comprising:
responsive to mutual authentication of the SwMI and the MS, storing in a memory associated with the MS, information related to the certificate received from the proxy server; and
using the information related to the certificate received from the proxy server during authentication in a subsequent secure IP session with the proxy server.

16. The method of claim 14 or 15, wherein the method further comprises:
responsive to mutual authentication of the SwMI and the MS, transmitting, with the MS, a certificate signing request (CSR) to the proxy server.

17. The method according to any of the claims from 14 to 16, wherein the secure IP session is a TLS session.

18. The method according to any of the claims from 14 to 17, wherein the proxy server is a gateway to the LMR network.

19. The method according to any of the claims from 14 to 18, wherein, prior to mutual authentication of the MS and the SwMI and after establishment of the secure IP session with the MS, the proxy server restricts access of the MS to the LMR network.

20. The method according to any of the claims from 14 to 19, wherein the MS connects to the proxy server from at least one selected from the group consisting of cellular network and a WiFi network, and mutually authenticating the MS with the SwMI is performed after authentication of the MS to the cellular network or the WiFi network.

## Patentansprüche

1. Konvergiertes Funkgerät (104), das Folgendes umfasst:
ein Hochfrequenz-(HF)-Sendersystem (204, 208), das dazu ausgelegt ist, eine Kommunikation in einem Internetprotokoll-(IP)-basierten Netzwerk durchzuführen; und
einen elektronischen Prozessor, der dazu ausgelegt ist, sich mit einer Schalt- und Verwaltungsinfrastruktur (SwMI) eines zweiten Netzwerks einer anderen Modalität als das IP-basierte Netzwerk durch Folgendes zu authentifizieren:
Einrichten einer nicht authentifizierten sicheren IP-Sitzung mit einem Proxy-Server, der mit der SwMI verknüpft ist,
Berechnen von Daten, die von einem Zertifikat abgeleitet sind, das von dem Proxy-Server während des Einrichtens einer sicheren IP-Sitzung empfangen wird,
Empfangen, über den Proxy-Server, einer ersten Authentifizierungsaufforderung von der SwMI,
Bestimmen eines Ergebnisses der ersten Authentifizierungsaufforderung basierend auf den von dem Zertifikat abgeleiteten Daten,
Übertragen einer ersten Antwort an die SwMI über den Proxy-Server, wobei die erste Antwort eine zweite Authentifizierungsaufforderung und das Ergebnis der ersten Authentifizierungsaufforderung beinhaltet,
als Reaktion darauf, dass das Ergebnis der ersten Authentifizierungsaufforderung mit dem erwarteten Ergebnis der ersten Authentifizierungsaufforderung übereinstimmt, Empfangen, von der SwMI über den Proxy-Server, einer zweiten Antwort, die ein Ergebnis der zweiten Authentifizierungsaufforderung und eine Angabe beinhaltet, dass das Ergebnis der ersten Authentifizierungsaufforderung mit einem erwarteten Ergebnis der ersten Authentifizierungsaufforderung übereinstimmt,
Authentifizieren der SwMI durch Verifizieren, dass das Ergebnis der zweiten Authentifizierungsaufforderung mit einem erwarteten Ergebnis der zweiten Authentifizierungsaufforderung übereinstimmt, und
als Reaktion auf die Authentifizierung der SwMI, Durchführen einer Kommunikation im zweiten Netzwerk über den Proxy-Server.

2. Konvergiertes Funkgerät (104) nach Anspruch 1, wobei das Bestimmen des Ergebnisses der ersten Authentifizierungsaufforderung das Berechnen eines modifizierten Werts basierend auf einem Basiswert beinhaltet, der von dem konvergierten Funkgerät während der Authentifizierung mit der SwMI empfangen oder erzeugt wird, und den Daten, die von dem Zertifikat abgeleitet werden.

3. Konvergiertes Funkgerät (104) nach Anspruch 2, wobei der elektronische Prozessor dazu ausgelegt ist, den modifizierten Wert gemäß einer Hash-Funktion des Basiswerts und der von dem Zertifikat abgeleiteten Daten zu berechnen.

4. Konvergiertes Funkgerät (104) nach Anspruch 2 oder 3, wobei
die erste Authentifizierungsaufforderung eine Zufallszahl und einen Startwert (random seed, RS) beinhaltet, der zum Erzeugen der Zufallszahl verwendet wird, und
der modifizierte Wert eine modifizierte Zufallszahl basierend auf der Zufallszahl und den aus dem Zertifikat abgeleiteten Daten ist.

5. Konvergiertes Funkgerät (104) nach Anspruch 2 oder 3 oder 4, wobei
die erste Authentifizierungsaufforderung einen Startwert RS enthält und
das Bestimmen des Ergebnisses der ersten Authentifizierungsaufforderung ferner Folgendes beinhaltet:
Berechnen eines Sitzungsschlüssels KS basierend auf dem Startwert RS und einem gemeinsam genutzten Schlüssel K, und
Berechnen des Ergebnisses der ersten Authentifizierungsaufforderung gemäß einer Funktion des modifizierten Werts und des Sitzungsschlüssels KS.

6. Konvergiertes Funkgerät (104) nach Anspruch 5, wobei das zweite Netzwerk ein Landmobilfunk-(LMR)-TETRA-Netzwerk ist und der elektronische Prozessor dazu ausgelegt ist, den Sitzungsschlüssel KS unter Verwendung eines ersten TETRA-Algorithmus zu berechnen, und die Funktion des modifizierten Werts und des Sitzungsschlüssels KS ein zweiter TETRA-Algorithmus ist.

7. Konvergiertes Funkgerät (104) nach einem der vorhergehenden Ansprüche, wobei das Verifizieren, dass das Ergebnis der zweiten Authentifizierungsaufforderung mit einem erwarteten Ergebnis der zweiten Authentifizierungsaufforderung übereinstimmt, Folgendes beinhaltet:
Berechnen des erwarteten Ergebnisses der zweiten Authentifizierungsaufforderung basierend auf den Daten, die von dem Zertifikat abgeleitet sind, und
Bestimmen, dass das Ergebnis der zweiten Authentifizierungsaufforderung mit dem erwarteten Ergebnis der zweiten Authentifizierungsaufforderung übereinstimmt.

8. System (100) für eine Schalt- und Verwaltungsinfrastruktur (SwMI) eines LMR-Netzwerks, wobei das System Folgendes umfasst:
einen elektronischen Prozessor, der dazu ausgelegt ist, eine Mobilstation (MS) gegenüber der SwMI durch Folgendes zu authentifizieren:
Empfangen, von der MS über einen Proxy-Server, der mit der SwMI assoziiert ist, einer Anforderung, sich bei dem LMR-Netzwerk zu registrieren,
Übertragen, über den Proxy-Server, einer ersten Authentifizierungsaufforderung an die MS,
Empfangen, von der MS über den Proxy-Server, einer ersten Antwort, die eine zweite Authentifizierungsaufforderung und ein Ergebnis der ersten Authentifizierungsaufforderung beinhaltet,
Authentifizieren der MS durch Verifizieren, dass das Ergebnis der ersten Authentifizierungsaufforderung mit einem erwarteten Ergebnis der ersten Authentifizierungsaufforderung übereinstimmt,
Bestimmen eines Ergebnisses der zweiten Authentifizierungsaufforderung basierend auf Daten, die von einem Zertifikat abgeleitet sind, das von dem Proxy-Server empfangen wird,
Übertragen einer zweiten Antwort an die MS über den Proxy-Server, wobei die zweite Antwort das Ergebnis der zweiten Authentifizierungsaufforderung und eine Angabe beinhaltet, dass das Ergebnis der ersten Authentifizierungsaufforderung mit einem erwarteten Ergebnis der ersten Authentifizierungsaufforderung übereinstimmt,
als Reaktion auf das Empfangen, von der MS über den Proxy-Server, einer Angabe, dass das Ergebnis der zweiten Authentifizierungsaufforderung mit einem erwarteten Ergebnis der zweiten Authentifizierungsaufforderung übereinstimmt, Ermöglichen einer Kommunikation durch die MS in dem LMR-Netzwerk über den Proxy-Server.

9. System (100) nach Anspruch 8, wobei das Bestimmen des Ergebnisses der zweiten Authentifizierungsaufforderung das Berechnen eines modifizierten Werts basierend auf einem Basiswert beinhaltet, der durch die SwMI während der Authentifizierung mit der MS empfangen oder erzeugt wird, und den Daten, die von dem Zertifikat abgeleitet werden.

10. System (100) nach Anspruch 9, wobei
die zweite Authentifizierungsaufforderung eine Zufallszahl beinhaltet, und
der modifizierte Wert eine modifizierte Zufallszahl basierend auf einer Hash-Funktion der Zufallszahl und den aus dem Zertifikat abgeleiteten Daten ist.

11. System (100) nach Anspruch 9 oder 10, wobei das Bestimmen des Ergebnisses der ersten Authentifizierungsaufforderung ferner Folgendes beinhaltet:
Berechnen eines Sitzungsschlüssels KS' basierend auf einem Startwert RS und einem gemeinsam genutzten Schlüssel K, und
Berechnen des Ergebnisses der zweiten Authentifizierungsaufforderung gemäß einer Funktion des modifizierten Werts und des Sitzungsschlüssels KS'.

12. System (100) nach Anspruch 11, wobei das LMR-Netzwerk ein TETRA-Netzwerk ist und der elektronische Prozessor dazu ausgelegt ist, den Sitzungsschlüssel KS' unter Verwendung eines ersten TETRA-Algorithmus zu berechnen, und die Funktion des modifizierten Werts und des Sitzungsschlüssels KS' ein zweiter TETRA-Algorithmus ist.

13. System (100) nach einem der Ansprüche 8 bis 12, wobei das Verifizieren, dass das Ergebnis der ersten Authentifizierungsaufforderung mit einem erwarteten Ergebnis der ersten Authentifizierungsaufforderung übereinstimmt, Folgendes beinhaltet:
Berechnen des erwarteten Ergebnisses der ersten Authentifizierungsaufforderung basierend auf den Daten, die von dem Zertifikat abgeleitet sind, und
Bestimmen, dass das Ergebnis der ersten Authentifizierungsaufforderung mit dem erwarteten Ergebnis der zweiten Authentifizierungsaufforderung übereinstimmt.

14. Verfahren zum gegenseitigen Authentifizieren einer LMR-Mobilstation (MS) mit einer Schalt- und Verwaltungsinfrastruktur (SwMI) eines LMR-Netzwerks, wobei das Verfahren Folgendes umfasst:
Einrichten, mit der MS, einer sicheren Internetprotokoll-(IP)-Sitzung mit einem Proxy-Server, der mit der SwMI assoziiert ist;
Empfangen, mit der MS über den Proxy-Server, einer ersten Authentifizierungsaufforderung von der SwMI;
Bestimmen, mit der MS, eines Ergebnisses der ersten Authentifizierungsaufforderung basierend auf ersten Daten, die von einem Zertifikat abgeleitet sind, das von dem Proxy-Server während des Einrichtens der sicheren IP-Sitzung empfangen wird;
Authentifizieren der MS durch Verifizieren mit der SwMI, dass das Ergebnis der ersten Authentifizierungsaufforderung mit einem erwarteten Ergebnis der ersten Authentifizierungsaufforderung übereinstimmt;
Übertragen, mit der MS, einer zweiten Authentifizierungsaufforderung an die SwMI über den Proxy-Server;
Bestimmen, mit der SwMI, eines Ergebnisses der zweiten Authentifizierungsaufforderung basierend auf zweiten Daten, die von einem Zertifikat abgeleitet sind, von dem bekannt ist, dass es von dem Proxy-Server stammt;
Authentifizieren der SwMI durch Verifizieren mit der MS, dass das Ergebnis der zweiten Authentifizierungsaufforderung mit einem erwarteten Ergebnis der zweiten Authentifizierungsaufforderung übereinstimmt; und
als Reaktion auf die gegenseitige Authentifizierung der SwMI und der MS, Durchführen einer Kommunikation mit der MS im LMR-Netzwerk über den Proxy-Server.

15. Verfahren nach Anspruch 14, das ferner Folgendes umfasst:
als Reaktion auf die gegenseitige Authentifizierung der SwMI und der MS, Speichern von Informationen bezüglich des Zertifikats, das von dem Proxy-Server empfangen wird, in einem Speicher, der mit der MS assoziiert ist; und
Verwenden der Informationen bezüglich des Zertifikats, das von dem Proxy-Server während der Authentifizierung in einer nachfolgenden sicheren IP-Sitzung mit dem Proxy-Server empfangen wurde.

16. Verfahren nach Anspruch 14 oder 15, wobei das Verfahren ferner Folgendes umfasst:
als Reaktion auf die gegenseitige Authentifizierung der SwMI und der MS, Übertragen, mit der MS, einer Zertifikatsignierungsanforderung (CSR) an den Proxy-Server.

17. Verfahren nach einem der Ansprüche 14 bis 16, wobei die sichere IP-Sitzung eine TLS-Sitzung ist.

18. Verfahren nach einem der Ansprüche 14 bis 17, wobei der Proxy-Server ein Gateway zu dem LMR-Netzwerk ist.

19. Verfahren nach einem der Ansprüche 14 bis 18, wobei der Proxy-Server vor der gegenseitigen Authentifizierung der MS und der SwMI und nach dem Einrichten der sicheren IP-Sitzung mit der MS den Zugriff der MS auf das LMR-Netzwerk einschränkt.

20. Verfahren nach einem der Ansprüche 14 bis 19, wobei sich die MS mit dem Proxy-Server von mindestens einem verbindet, der aus der Gruppe ausgewählt ist, die aus einem zellularen Netzwerk und einem WiFi-Netzwerk besteht, und das gegenseitige Authentifizieren der MS mit der SwMI nach Authentifizierung der MS gegenüber dem zellularen Netzwerk oder dem WiFi-Netzwerk durchgeführt wird.

## Revendications

1. Dispositif radio convergent (104) comprenant :
un système émetteur radiofréquence (RF) (204, 208) configuré pour effectuer une communication dans un réseau basé sur le protocole Internet (IP) ; et
un processeur électronique configuré pour s'authentifier auprès d'une infrastructure de commutation et de gestion (SwMI) d'un second réseau d'une modalité différente de celle du réseau IP par
l'établissement d'une session IP sécurisée non authentifiée avec un serveur proxy associé à la SwMI,
le calcul de données dérivées d'un certificat reçu depuis le serveur proxy lors de l'établissement d'une session IP sécurisée,
la réception, par le biais du serveur proxy, d'une première épreuve d'authentification depuis la SwMI,
la détermination d'un résultat de la première épreuve d'authentification sur la base des données dérivées du certificat,
la transmission d'une première réponse à la SwMI par le biais du serveur proxy, la première réponse comprenant une seconde épreuve d'authentification et le résultat de la première épreuve d'authentification,
en réponse au fait que le résultat de la première épreuve d'authentification correspond au résultat attendu de la première épreuve d'authentification, la réception, depuis la SwMI par le biais du serveur proxy, d'une seconde réponse comprenant un résultat de la seconde épreuve d'authentification et une indication que le résultat de la première épreuve d'authentification correspond à un résultat attendu de la première épreuve d'authentification,
l'authentification de la SwMI en vérifiant que le résultat de la seconde épreuve d'authentification correspond à un résultat attendu de la seconde épreuve d'authentification, et
en réponse à l'authentification de la SwMI, l'exécution de la communication dans le second réseau par le biais du serveur proxy.

2. Dispositif radio convergent (104) selon la revendication 1, dans lequel :
la détermination du résultat de la première épreuve d'authentification consiste à calculer une valeur modifiée sur la base d'une valeur de base reçue ou générée par le dispositif radio convergent pendant l'authentification auprès de la SwMI et des données dérivées du certificat.

3. Dispositif radio convergent (104) selon la revendication 2, dans lequel le processeur électronique est configuré pour calculer la valeur modifiée en fonction d'une fonction de hachage de la valeur de base et des données dérivées du certificat.

4. Dispositif radio convergent (104) selon la revendication 2 ou 3, dans lequel
la première épreuve d'authentification comprend un nombre aléatoire et un germe aléatoire RS utilisé pour générer le nombre aléatoire, et
la valeur modifiée est un nombre aléatoire modifié sur la base du nombre aléatoire et des données dérivées du certificat.

5. Dispositif radio convergent (104) selon la revendication 2, 3 ou 4, dans lequel
la première épreuve d'authentification comprend un germe aléatoire RS, et
la détermination du résultat de la première épreuve d'authentification comprend en outre
le calcul d'une clé de session KS sur la base du germe aléatoire RS et d'une clé partagée K, et
le calcul du résultat de la première épreuve d'authentification en fonction d'une fonction de la valeur modifiée et de la clé de session KS.

6. Dispositif radio convergent (104) selon la revendication 5, dans lequel le second réseau est un réseau TETRA radio mobile terrestre (LMR), et le processeur électronique est configuré pour calculer la clé de session KS en utilisant un premier algorithme TETRA, et la fonction de la valeur modifiée et de la clé de session KS est un second algorithme TETRA.

7. Dispositif radio convergent (104) selon l'une quelconque des revendications précédentes, dans lequel la vérification du fait que le résultat de la seconde épreuve d'authentification correspond à un résultat attendu de la seconde épreuve d'authentification comprend le calcul du résultat attendu de la seconde épreuve d'authentification sur la base des données dérivées du certificat, et
la détermination du fait que le résultat de la seconde épreuve d'authentification correspond au résultat attendu de la seconde épreuve d'authentification.

8. Système (100) pour une infrastructure de commutation et de gestion (SwMI) d'un réseau LMR, le système comprenant :
un processeur électronique configuré pour authentifier une station mobile (MS) auprès de la SwMI par
la réception, depuis la MS par le biais d'un serveur proxy associé à la SwMI, d'une demande d'enregistrement auprès du réseau LMR,
la transmission à la MS par le biais du serveur proxy d'une première épreuve d'authentification,
la réception depuis la MS par le biais du serveur proxy d'une première réponse comprenant une seconde épreuve d'authentification et un résultat de la première épreuve d'authentification,
l'authentification de la MS en vérifiant que le résultat de la première épreuve d'authentification correspond à un résultat attendu de la première épreuve d'authentification,
la détermination d'un résultat de la seconde épreuve d'authentification sur la base de données dérivées d'un certificat reçu depuis le serveur proxy,
la transmission d'une seconde réponse à la MS par le biais du serveur proxy, la seconde réponse comprenant le résultat de la seconde épreuve d'authentification et une indication du fait que le résultat de la première épreuve d'authentification correspond à un résultat attendu de la première épreuve d'authentification,
en réponse à la réception, depuis la MS par le biais du serveur proxy, d'une indication du fait que le résultat de la seconde épreuve d'authentification correspond à un résultat attendu de la seconde épreuve d'authentification, l'autorisation de la communication par la MS dans le réseau LMR par le biais du serveur proxy.

9. Système (100) selon la revendication 8, dans lequel la détermination du résultat de la seconde épreuve d'authentification consiste à calculer une valeur modifiée sur la base d'une valeur de base reçue ou générée par la SwMI pendant l'authentification auprès de la MS et des données dérivées du certificat.

10. Système (100) selon la revendication 9, dans lequel la seconde épreuve d'authentification comprend un nombre aléatoire, et
la valeur modifiée est un nombre aléatoire modifié sur la base d'une fonction de hachage du nombre aléatoire et des données dérivées du certificat.

11. Système (100) selon la revendication 9 ou 10, dans lequel la détermination du résultat de la première épreuve d'authentification comprend en outre
le calcul d'une clé de session KS sur la base d'un germe aléatoire RS et d'une clé partagée K, et
le calcul du résultat de la seconde épreuve d'authentification en fonction d'une fonction de la valeur modifiée et de la clé de session KS'.

12. Système (100) selon la revendication 11, dans lequel le réseau LMR est un réseau TETRA, et le processeur électronique est configuré pour calculer la clé de session KS' en utilisant un premier algorithme TETRA, et la fonction de la valeur modifiée et de la clé de session KS' est un second algorithme TETRA.

13. Système (100) selon l'une quelconque des revendications 8 à 12, dans lequel la vérification du fait que le résultat de la première épreuve d'authentification correspond à un résultat attendu de la première épreuve d'authentification comprend
le calcul du résultat attendu de la première épreuve d'authentification sur la base des données dérivées du certificat, et
la détermination du fait que le résultat de la première épreuve d'authentification correspond au résultat attendu de la seconde épreuve d'authentification.

14. Procédé d'authentification mutuelle d'une station mobile LMR (MS) auprès d'une infrastructure de commutation et de gestion (SwMI) d'un réseau LMR, le procédé comprenant :
l'établissement, par la MS, d'une session de protocole Internet (IP) sécurisée avec un serveur proxy associé à la SwMI ;
la réception, par la MS par le biais du serveur proxy, d'une première épreuve d'authentification depuis la SwMI ;
la détermination, par la MS, d'un résultat de la première épreuve d'authentification sur la base de premières données dérivées d'un certificat reçu depuis le serveur proxy lors de l'établissement de la session IP sécurisée ;
l'authentification de la MS en vérifiant, avec la SwMI, que le résultat de la première épreuve d'authentification correspond à un résultat attendu de la première épreuve d'authentification ;
la transmission, par la MS, d'une seconde épreuve d'authentification à la SwMI par le biais du serveur proxy ;
la détermination, par la SwMI, d'un résultat de la seconde épreuve d'authentification sur la base de secondes données dérivées d'un certificat connu comme provenant du serveur proxy ;
l'authentification de la SwMI en vérifiant, avec la MS, que le résultat de la seconde épreuve d'authentification correspond à un résultat attendu de la seconde épreuve d'authentification ; et
en réponse à l'authentification mutuelle de la SwMI et de la MS, l'exécution de la communication, par la MS, dans le réseau LMR par le biais du serveur proxy.

15. Procédé selon la revendication 14, comprenant en outre :
en réponse à l'authentification mutuelle de la SwMI et de la MS, le stockage dans une mémoire associée à la MS d'informations relatives au certificat reçu depuis le serveur proxy ; et
l'utilisation des informations relatives au certificat reçu depuis le serveur proxy lors de l'authentification dans une session IP sécurisée ultérieure avec le serveur proxy.

16. Procédé selon la revendication 14 ou 15, le procédé comprenant en outre :
en réponse à l'authentification mutuelle de la SwMI et de la MS, la transmission, par la MS, d'une demande de signature de certificat (CSR) au serveur proxy.

17. Procédé selon l'une quelconque des revendications 14 à 16, dans lequel la session IP sécurisée est une session TLS.

18. Procédé selon l'une quelconque des revendications 14 à 17, dans lequel le serveur proxy est une passerelle vers le réseau LMR.

19. Procédé selon l'une quelconque des revendications 14 à 18, dans lequel, avant l'authentification mutuelle de la MS et de la SwMI et après l'établissement de la session IP sécurisée avec la MS, le serveur proxy restreint l'accès à la MS pour le réseau LMR.

20. Procédé selon l'une quelconque des revendications 14 à 19, dans lequel la MS se connecte au serveur proxy à partir d'au moins un élément sélectionné dans le groupe constitué d'un réseau cellulaire et d'un réseau WiFi, et l'authentification mutuelle de la MS et de la SwMI est exécutée après l'authentification de la MS auprès du réseau cellulaire ou du réseau WiFi.
